(19) Europäisches Patentamt European Patent Office Office européen des brevets

(11) **EP 3 183 544 B1**

(12) **EUROPEAN PATENT SPECIFICATION**

(45) Date of publication and mention of the grant of the patent:
**19.05.2021 Bulletin 2021/20**

(51) Int Cl.:
*G01H 5/00* (2006.01)       *G01N 29/07* (2006.01)
*G01L 1/25* (2006.01)       *G01S 15/88* (2006.01)
*G01S 15/10* (2006.01)       *G01S 7/54* (2006.01)
*G01S 11/06* (2006.01)

(21) Application number: **15744289.8**

(22) Date of filing: **22.07.2015**

(86) International application number:
**PCT/GB2015/052118**

(87) International publication number:
**WO 2016/027056 (25.02.2016 Gazette 2016/08)**

(54) **DERIVING CONTACT STRESS OR CONTACT LOAD USING ULTRASOUND DATA**

BESTIMMUNG VON KONTAKTSPANNUNG ODER KONTAKTLAST MITTELS ULTRASCHALLDATEN

DÉTERMINATION DE LA TENSION DE CONTACT OU CHARGE DE CONTACT PAR DES DONNÉES ULTRASONORES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2014 GB 201414998**

(43) Date of publication of application:
**28.06.2017 Bulletin 2017/26**

(73) Proprietor: **The University Of Sheffield**
**Sheffield S10 2TN (GB)**

(72) Inventors:
• **MILLS, Robin**
  **Sheffield**
  **South Yorkshire S11 7PF (GB)**
• **DWYER-JOYCE, Robert**
  **Hope Valley**
  **Derbyshire S32 3XZ (GB)**
• **HUNTER, Andrew**
  **Leeds**
  **Yorkshire LS11 9BE (GB)**
• **CHEN, Wenqu**
  **Sheffield**
  **Yorkshire S3 7XE (GB)**

(74) Representative: **HGF**
**1 City Walk**
**Leeds LS11 9DX (GB)**

(56) References cited:
DE-A1-102008 034 484       JP-A- 2011 038 835
JP-A- 2012 141 230         SU-A1- 1 763 908
US-A- 4 821 574            US-A1- 2001 049 587
US-A1- 2014 135 655

**Description**

**BACKGROUND**

Machines that transmit load and power and initiate or propagate motion require tribological machine elements such as rolling bearings, journal bearings, gears, cams and tappets, face seals, metal rolls, wheels and rails, etc. These machine elements have two bodies that come into contact and transmit load and motion. Frequently lubricants are used to keep the surfaces apart and reduce friction and wear. The life and durability of such components depends on whether the applied load causes overload in the form of plastic deformation, impact damage or buckling. Alternatively the applied load is below a yield load but dynamically varying causing the components to fail by contact fatigue. This is typically the end of normal life of many such tribological machine elements.

In some machines it may difficult to determine the load on rolling bearings and similar elements, particularly where the load paths are complex and/or highly transient. In such cases, determining (a) whether overload has occurred, or (b) the load history, is difficult. Both of these govern the residual life of the rolling bearing. Further, the load applied to a bearing is not necessarily uniformly distributed on each of the rolling elements. The load applied to the whole bearing does therefore not indicate a priori the stress exhibited on the individual rolling elements or raceways.

SU1763908 relates to measurement of contact stress using a gasket.

DE102008034484 relates to an angular contact bearing arrangement with a pinion shaft and two angular contact bearings. The bearings are tensioned and engaged against each other. The shaft is rotatably supported in housing sections by the bearings. Length changes of the shaft resulting from prestress in the arrangement are directly determined at the shaft using an ultrasonic measuring method. Characteristics of ultrasonic impulses are determined based on the length changes and compared with reference values.

US2014135655 relates to a prosthetic component suitable for long-term implantation. The prosthetic component measures a parameter of the muscular-skeletal system. The prosthetic component comprises a first structure having at least one support surface, a second structure having at least one feature configured to couple to bone, and at least one sensor. The prosthetic component is a housing for the at least one sensor and electronic circuitry. The electronic circuitry is hermetically sealed from an external environment. The at least one sensor couples to the support surface of the first structure. The support surface of the first structure is compliant. The first and second structure are coupled together housing the at least one sensor and electronic circuitry.

JP2011038835 relates to a tunnel lining thickness measuring device, a measuring method, and a formwork used therefor, measuring the thickness of a concrete lining when a tunnel is lined with concrete while the concrete is in unset state.

US4821574 relates to measuring an ultrasonic velocity in a region of interest (ROI) within a medium, including an array transducer, and a velocity measuring circuit. The transducer is constructed of a plurality of transducer elements which are subdivided into at least first and second transmitting sections and first and second receiving sections separated by a distance. First and second ultrasonic beams are emitted from the first and second transmitting sections to the ROI under the condition that the transmitting beam axis is intersected by the second ultrasonic beam axis. Then, the first and second receiver sections receive in total four echoes reflected from four corners of the ROI. The velocity measuring circuit calculates the propagation time of the ultrasonic beams and finally the ultrasonic velocity based upon the propagation time.

**BRIEF SUMMARY OF THE DISCLOSURE**

Aspects and embodiments of the invention are set out in the appended claims.

**BRIEF DESCRIPTION OF THE DRAWINGS**

Embodiments of the invention are further described hereinafter with reference to the accompanying drawings, in which:

Figure 1 shows a system according to an embodiment.
Figure 2 shows an example of the system of Figure 1 with additional detail.
Figures 3a and 3b show examples of arrangements for measurement of a rolling element bearing.
Figure 4 shows a rolling element bearing having multiple sensors.
Figure 5a shows a roller applying stress to a counterface.
Figure 5b shows a cross-section through the roller and counterface of Figure 5a to illustrate factors affecting time-of-flight of ultrasound.
Figure 5c shows the theoretical prediction of the time-of-flight changes for a roller and counterface of Figure 5a to illustrate the attribution to both counterface deflection and the acoustoelastic effect.

Figure 6 illustrates a simple zero-crossing approach to determine the time shift between a reference signal 610 and a measured signal 620.

Figure 7 shows an Argand diagram for the ideal reflected wave phase variation with different contact conditions in which the mating conditions are of the same material.

Figure 8 illustrates two simulated signals with a phase shift, and the envelopes of the signals.

Figure 9 shows a pair of experimentally measured signals from a contact, and the envelopes of the signals.

Figure 10 shows an example waveform of a reflected ultrasonic signal from a interface between a bearing raceway and rolling element.

Figure 11 shows an arrangement for testing embodiments of the invention.

Figure 12 shows the change in the time-of-flight as each rolling element of a bearing moves over a sensor location in the arrangement of Figure 11.

Figure 13 shows measured time-of-flight change with applied contact load in the arrangement of Figure 11.

Figure 14 shows the measured and applied contact loads in the arrangement of Figure 11.

Figure 15 shows a method according to an embodiment.

Figure 16 shows another method according to an embodiment.


## DETAILED DESCRIPTION

The thickness of a solid component may be measured using the time of flight (ToF) of an ultrasonic wave. An ultrasonic transducer is coupled to one side of the component and a pulse reflected from the other side. The time that is taken for the pulse to travel through the material is recorded and multiplied by the speed of sound in the materials to give the component thickness. Changes in the dimensions of a component are also commonly measured using this approach. For most components measured in this way (such as pipes, pressure vessels, or structural components) the speed of sound is treated as being a material constant.

However, the inventors of the present invention have realized that, if the dimensional changes are caused by a load applied through a tribological contact (e.g. in a roiling bearing, gear, cam/tappet) then this simple relationship between ToF and thickness is may no longer be valid, or may lead to inaccurate results. Firstly, changes to the phase of the reflected signal make accurate measurement difficult. Secondly, the speed of sound varies with the stress state in the component (known as the acoustoelastic effect). Since the ToF changes expected when a tribological contact is loaded are very small, either or both these effects may be significant and cannot be neglected in some systems. Aspects of the present invention relate to extraction of the deflection in a tribological machine element from a ToF signal, and hence the determination of the applied load on the component.

Embodiments of the invention enable determination of contact stress or applied load where the first and second elements are in tribological contact. Herein, tribological contact refers to direct contact between the elements or contact between the elements either with or without an interposed fluid (e.g. a lubricant) layer, such as an oil film. The element for which contact stress or applied load is to be determined is referred to herein as the analysis subject. Herein, the first element is assumed to be the analysis subject, without loss of generality.

Embodiments of the invention enable the determination of element deflection, and applied load and hence contact stress, in a tribological machine element such as a rolling bearing, gear, cam/tappet, piston ring/liner, metal roll, wheel and rail, etc. In some examples, this is used to determine the load history of the component. The load history may be used to determine the expected residual fatigue life of the component.

Embodiments of the invention may be applied to the shaft or gearbox bearings in a wind turbine, for example. In a wind turbine, the load path from the blades through the gearbox to the shaft or gearbox bearings may be complex and highly transient. Simple measurements of torque on the rotor shafts cannot effectively be used to determine the load history in the bearings. This makes it difficult to determine the load on the bearings, and determine (a) whether overload has occurred, or (b) the load history. Both of these govern the residual life of the rolling bearing. Further the load applied to the bearing is not uniformly distributed on each of the rolling elements. The load applied to the whole bearing does therefore not indicate a priori the stress exhibited on the individual rolling elements or raceways.

Embodiments of the invention may be applied to railway track, for example. In wheel rail contact a normal load is transmitted from the wheel to the rail. The load is transient and depends on track conditions, wheel location with respect to the track, and vehicle suspension. Excessive loading can result in track damage, wear, and in extreme cases vehicle derailment. Herein, railed vehicle refers to a vehicle that runs on rails or tracks (vehicle tracks), such as a train, train carriage, tram, etc.

Further embodiments of the invention may be applied to bearings in, for example, paper mills, metal rolling mills, and hydro-power generators.

**Measurement and Analysis System**

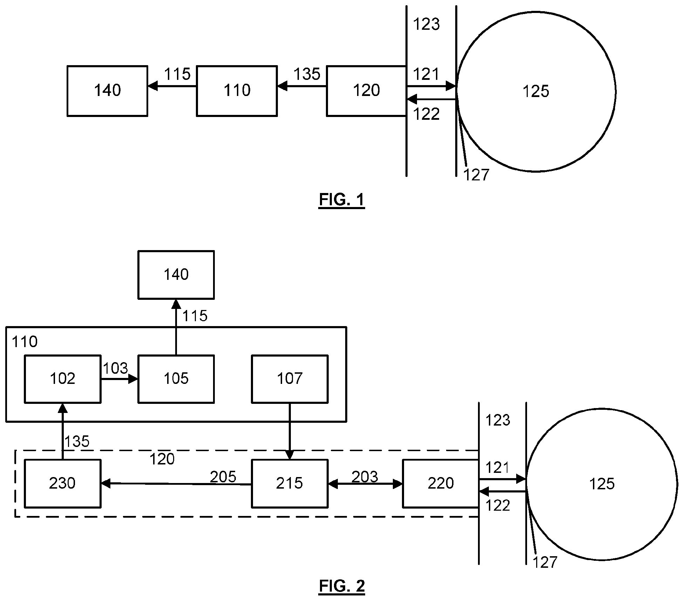

Figure 1 shows a system according to an embodiment. The system includes an analysis device 110, such as a personal computer (PC), arranged to receive ultrasound data 135. The ultrasound data 135 relates to ultrasound received from a contact surface of an analysis subject 123. The ultrasound data 135 may describe voltage data corresponding to a voltage output from an ultrasound sensor in response to a received ultrasound signal. The ultrasound data may be digitized voltage data. The analysis device 110 is arranged to provide output data 115 relating to at least one of a stress in the analysis subject or a load applied to the analysis subject. The system may include ultrasound receiving equipment 120 to measure ultrasound from the contact surface 127, generate the ultrasound data 135 based on the measured ultrasound. In some examples the ultrasound receiving equipment 120 may also generate the ultrasound. The ultrasound equipment may be ultrasound pulsing and receiving equipment, for example.

The output data 115 may be provided to a receiving device 140. The receiving device may be an output device, such as a display or printer, to render the output data 115 in a human-readable form. The receiving device 140 may be a storage device to store the output data 115. In some examples the output data 115 may be used in further calculations to monitor the analysis subject 123, in this case the receiving device is a processing device, possibly embodied by analysis device 110. Figure 1 shows the receiving device as external to the analysis device, but in some embodiments the receiving device 140 may be internal or integral with the analysis device, and may be a process (e.g. a further calculation) within the analysis device, rather than a physical component.

The analysis subject 123 may be any component that is to be studied. For example, analysis subject 123 may be a rolling element race (schematically illustrated without curvature), and the contact surface 127 may a portion of rolling element race that comes into contact with a rolling element 125 of the bearing. In some embodiments, the contact surface may be the surface of the rolling element. In some embodiments the rolling element may be the analysis subject, since a load on a rolling element is the same as a measured load in the rolling element race due to the rolling element. In a further example, the analysis subject may be a rail of a railway, the contact surface a surface of the rail that makes contact with a wheel or a surface of the wheel that makes contact with the rail. In some examples the wheel may be the analysis subject. The ultrasound sensor may be located on either the wheel or the track. The ultrasound generator may be located on the same component (e.g. wheel or track) as the ultrasound sensor (e.g. the sensor detects a reflection from the contact surface), or may be located on the other component (e.g. the sensor detects ultrasound transmitted via the contact surface). It is to be noted that in this context "located on" does not imply any particular orientation, so, for example, the sensor may be mounted beneath the rail head but still be considered to be "mounted on". An arrangement with one or more ultrasound transducers mounted within a rim of the wheel to transmit ultrasound and receive reflected ultrasound (i.e. acting as ultrasound generators and ultrasound sensors) is expected to provide an efficient usage of ultrasound components, avoiding the need for components at intervals along a railway track.

Ultrasound 122 is propagated from the contact surface 127, through the analysis subject 123, to be detected by the ultrasound equipment 120. In some embodiments, such as that of Figure 1, the ultrasound equipment generates and detects the ultrasound at the same face of the analysis subject 123, by generating an ultrasound pulse 121 to travel from the face of the analysis subject 123 to the contact surface 127, reflect from the contact surface 127 and return to the face of the analysis subject 123, where it is detected. Thus, in this case, the received pulse 122 is a reflected pulse.

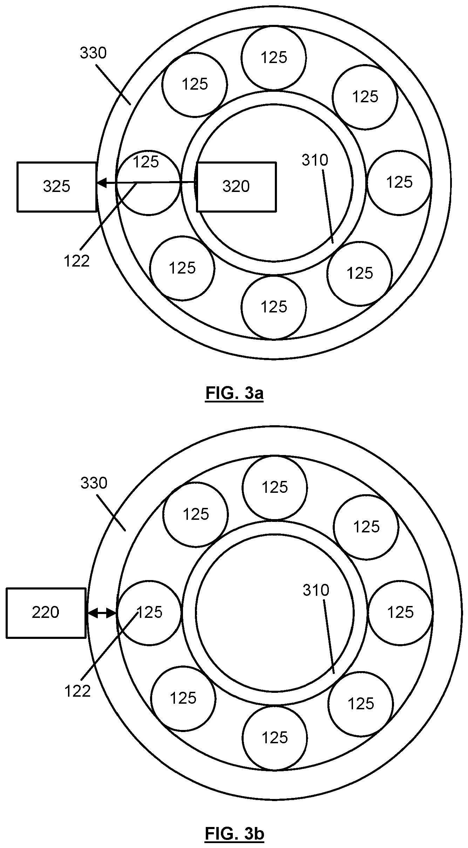

In other embodiments, the received pulse 122 is a transmitted pulse that is transmitted across the contact surface. For example, the received pulse may be emitted by an ultrasonic element positioned on an inner surface of an inner rolling element race, the ultrasound being transmitted through the inner rolling element race, the rolling element 125 and the outer rolling element race to be detected by the ultrasound equipment 120. Figure 3a shows an example with ultrasound generator 320 on an inner surface of an inner rolling element race 310, and ultrasound detector 325 on an outer surface of an outer rolling element race 330. Figure 3b shows an example with the ultrasound generator and sensor on an outer surface of an outer rolling element race. In this example, transducer 220 acts as both a generator and receiver (sensor) of ultrasound, although a separate generator and sensor could be used. The ultrasound is transmitted from the transducer 220, reflects from the inner surface of the outer rolling element race 310 and is then detected by transducer 220.

In some arrangements, using a reflected pulse (reflected from the contact surface) as the received pulse is likely to be simpler than using a transmitted pulse (transmitted through the contact surface), for example by including fewer interfaces between machine elements in the path of the ultrasound between the generator and receiver of the ultrasound and by reducing the number of transducers required.

According to embodiments of the invention, the ultrasound received by the ultrasound equipment 120 from the contact surface 127 has a propagation direction having a greatest component perpendicular to the contact surface. The contact surface may be the face to which a principal component of the stress is applied. Herein ultrasound has a propagation direction having a greatest component perpendicular to a face, if a component of the propagation direction of the ultrasound perpendicular to the face is greater than a component of the propagation direction parallel to the face. That is, if the ultrasound direction is separated into vector components, one parallel to the surface and one perpendicular to the surface, the perpendicular component is greater than the parallel component. In some examples, the ultrasound may be substantially perpendicular to the contact surface. In some examples the propagation direction of the ultrasound may be within 5 degrees of perpendicular to the contact surface. In some examples, the propagation direction of the ultrasound may be within 45 degrees of perpendicular to the propagation surface.

Figure 2 shows an embodiment according to Figure 1 in more detail. In this embodiment, the ultrasound equipment 120 includes ultrasonic transducer 220 to generate and detect ultrasound pulses. The ultrasonic transducer 220 may be a focused transducer, a directly bonded contact transducer, or a non-contact air or water coupled transducer, for example.

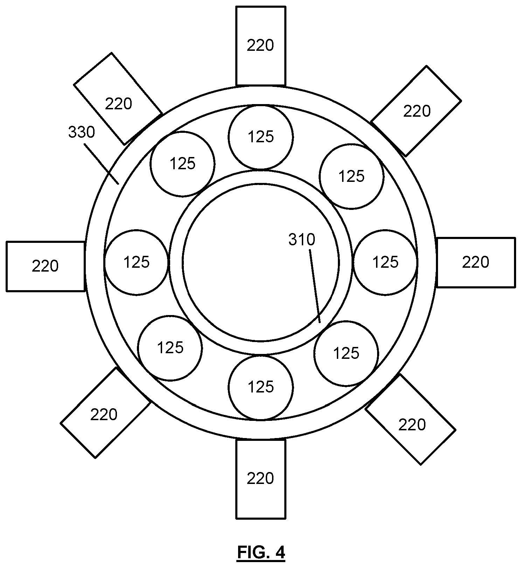

Multiple ultrasound sensors (e.g. multiple transducers 220) may be used within a system. For example multiple sensors may be located at different points on a machine element, and/or multiple machine elements may be monitored by respective sensors. Figure 4 illustrates a rolling element bearing having multiple sensors 220 located around the outer rolling element race. Each sensor 220 may be a transducer for generating, as well as receiving, ultrasound.

*Ultrasonic generator and sensor*

The type of transducer is not particularly limited. The transducer may be selected to generate an ultrasonic waveform with a frequency and amplitude that will penetrate and travel through the elements in the ultrasound path (these may include the analysis subject, for example). Such transducers may, for example, be piezo-electric based, may use thermo-elastic (e.g. laser based) generation of sound, may be electro-magnetic acoustic transducers (EMAT), or may be a deposited film of piezo-electric material. In some embodiments piezo-based ultrasonic transducers may be bonded directly to the component or coupled using a gel or liquid.

In some embodiments the transducer may include a section of piezo-electric material bonded directly to the component using a permanent adhesive. An epoxy based material may be applied to the sensor and connecting wires as a protective coating. This enables the provision of a sensor with a small size, which in turn enables a high resolution. Furthermore, this may provide a low profile sensor that does not disrupt operation of the machine in which the analysis subject 123 is operating.

*Pulsing and receiving apparatus*

The ultrasonic transducer 220 produces pulses of ultrasound according to control from ultrasonic pulse receiver (UPR) 215. UPR 215 generates short duration voltage pulses or waveforms which are transmitted to the transducer.

The transducer 220 outputs detected ultrasound as an electrical signal 203 (e.g. a voltage, the voltage may be proportional to the amplitude of the detected ultrasound) to the UPR 215 and the UPR amplifies this.

The analogue signals 205 produced by the UPR 215 from the detected ultrasound are passed to digitizer 230, which digitizes the analogue signal 205 to produce digital ultrasound data 135. Digitizer 230 may be a stand-alone digitizer, digital oscilloscope, or digitising PC card. In some embodiments, a high frequency digitizer may be used to obtain sufficient resolution to achieve measurements of the required accuracy for a particular application. For example, the high frequency digitizer may sample at a rate between 100 MHz to 50 GHz, and in some examples the high frequency digitizer may sample at a rate between 25 GHz and 50 GHz.

In some embodiments a personal computer and suitable software drivers may be used to control the pulser/receiver, digitizer, and multiplexer.

In embodiments having multiple sensors (e.g. as illustrated in Figure 4), a multichannel ultrasonic pulser and receiver or a multiplexing switching system may be employed.

Any suitable arrangement may be used to control the transducers and produce ultrasound of a suitable amplitude and frequency range. For example, some embodiments may have a pulsing voltage in the range 10-100V, and a transducer frequency (i.e. the frequency of the ultrasonic displacement wave) of 1 to 100MHz.

*Analysis Device*

According to the embodiment of Figure 2, the analysis device 110 includes a time-of-flight determining section 102, an output calculation section 105 and a control section 107. These sections may be implemented by a combination of physical components, and some components may be used in more than one section.

The control section may control the time-of-flight determining section 102 and output calculation section 105. In some embodiments the control section may also control a signal processing section. In some embodiments the signal processing section may be included in the time-of-flight determining section 102 or output calculation section 105. In some embodiments the control section may also control the UPR 215 to control the generation of ultrasound pulses.

The time-of-flight, ToF determining section 102 receives the ultrasound data describing an ultrasonic pulse from the ultrasound equipment (e.g. from digitizer 230) and determines the time-of-flight of the ultrasound pulse. The ToF of the ultrasound pulse is passed to calculation section 105 as time-of-flight data 103. The calculation section 105 derives at least one of a stress in the analysis subject 123 or a load applied to the analysis subject 123. The stress and/or load derived by the calculation section 105 is provided to receiving section 140 as output data 115.

**Calculation of Output Data**

The calculation section derives the stress and/or load from the ToF of an ultrasound pulse. The amplitude of the ultrasonic pulse also depends on the load on the contact. The higher the load the lower the amplitude of a reflected pulse at the interface of the element. As the load is increased the surfaces are pressed closer together and more of the ultrasound passes through the contact, less being reflected. However, this is not a good method for determining contact load, as the amplitude also depends on the surface roughness and the thickness of the lubricating film which are likely to change with bearing operating parameters as well as wear or degradation of the bearing surfaces. Therefore, determining the stress or load using the ToF of the ultrasound pulse may be more reliable than determination using a measured amplitude of the received ultrasound.

The change in ToF of the ultrasound wave or pulse, between the component in its stressed and unstressed state, is given by:

$$\Delta t = \Delta t_{deflection} + \Delta t_{c\ change} \qquad [1]$$

Where $\Delta t_{deflection}$ is the ToF change caused by the shortening of the sound path by deflection, and $\Delta t_{c\ change}$ is the time-of-flight change caused because the speed of sound increases under compressive stress due to the acoustoelastic effect. The stress and load may be determined from $\Delta t_{deflection}$ and $\Delta t_{c\ change}$ which are stress and load dependent.

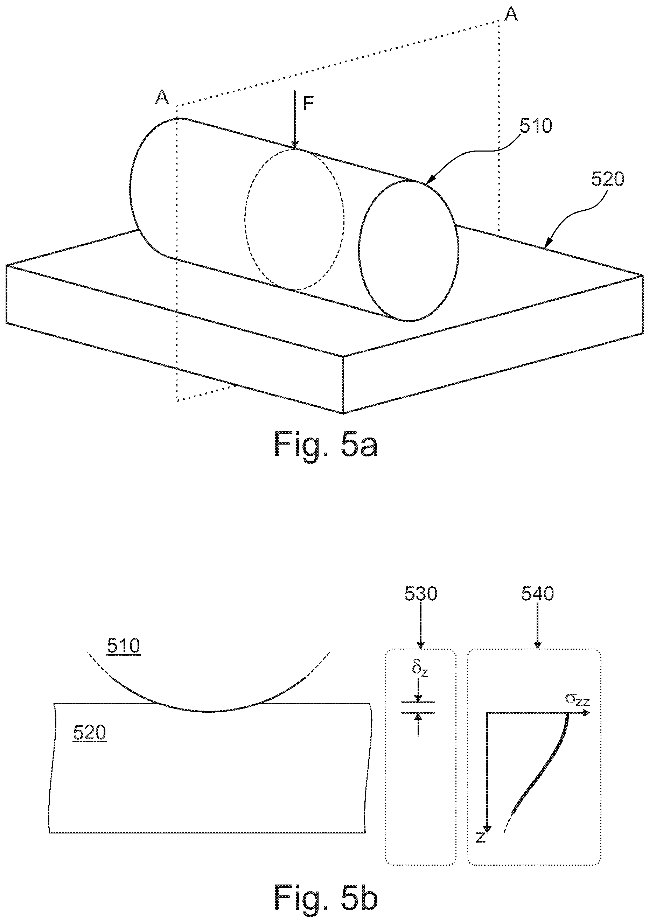

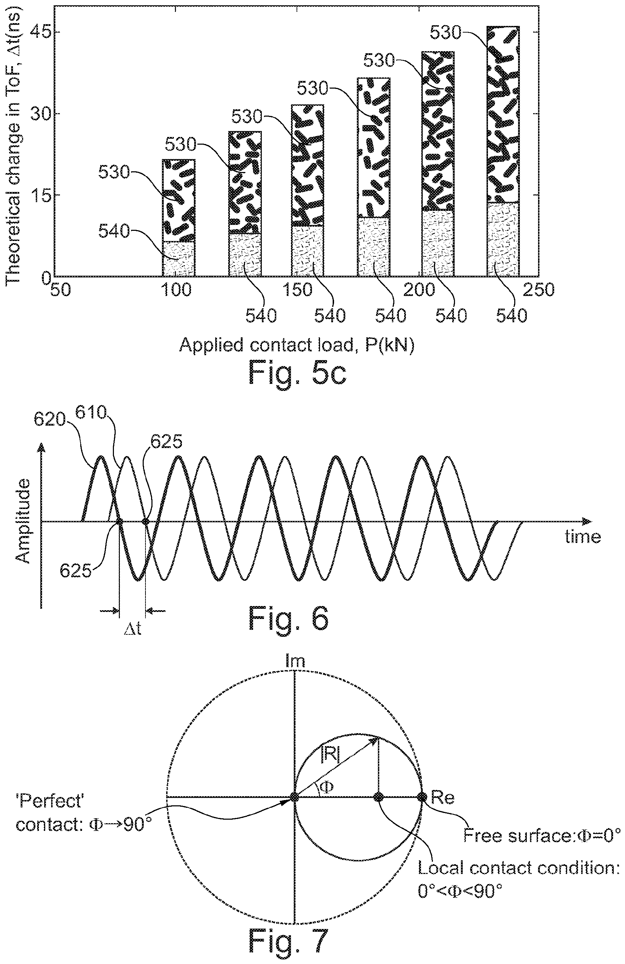

Figure 5 illustrates the stress-related factors affecting the time-of-flight.

Figure 5a shows a roller 510 and a counterface 520. Roller 510 bears against counterface 510 with force F. Figure 5b shows a section through plane A of Figure 5a. The deflection of the counterface 520 due to the load F applied via roller 510 is illustrated in 530. This deflection leads to a shorter ultrasound path, causing a reduction in the time-of-flight of the ultrasound across the element forming the counterface.

The normal stress component is illustrated by 540, which causes an increase in the speed of sound in the material of the counterface 520. This reduces the time taken for the ultrasound to propagate through the material of the counterface 520, resulting in a reduction in the time-of-flight.

In order to interpret the measured ultrasound signal, the measured signal may be compared with a reference signal. In some embodiments, the reference signal is a signal with a different contact condition (e.g. no contact). In this case, the time interval between the pulse generation and receipt of the pulse can be compared for the measured and reference signals, and the difference between these intervals is the change in time-of-flight due to the change in contact condition (assuming no other changes were made). Herein, the term "measured signal" is used to refer to the signal of interest. However, it is to be understood that the reference signal may also be measured. In some cases, for example where a difference in loading between two loaded states is to be determined, two measured signals may be compared, and the choice assignment of these signals as a "measured signal" and a "reference signal" may be arbitrary.

*Acoustoelastic Effect and $\Delta t$ caused by Speed of Sound Change*

The acoustoelastic effect relates the speed of sound in a material under stress and the strain in the material, $\varepsilon$:

$$\frac{\mathrm{d}c/c}{\mathrm{d}\varepsilon} = A \qquad [2]$$

Where c is the speed of sound in the material of the analysis subject, $\varepsilon$ is the strain in the element, and A is an acoustoelastic constant for the analysis subject.

Equation 2 is a simplified form that ignores higher-order terms but is of sufficient accuracy to interpret experimental measurements. The acoustoelastic constant may be obtained from simple experiments of material under uniaxial stress or from published literature (e.g. Egle, D.M. and Bray, D.E., (1976). Measurement of acoustoelastic and third-order elastic constants for rail steel. J. Acoust. Soc. Am., 60(3), 741-744).

Though the peak stresses in many mechanical contacts may be high (e.g. in the order of several GPa for rolling bearings), the spatial extent of this stress is highly localized. Due to the localized nature of the change in the speed of sound, this effect tends to be localized in a region of the counterface 520 close to the roller 510. The effect of stress on the time-of-flight of the ultrasound is cumulative along the path of the ultrasound, as illustrated in Figure 5.

The change in time of flight may be relatively small, the magnitude being in the order of nanoseconds for most engineering contacts. The contributions from the deflection of the surface 530 and the change in the speed of sound by the acoustoelastic effect 540 may be comparable in magnitude and in such cases the latter cannot be neglected, as illustrated in Figure 5c.

*Derivation of Output from $\Delta t$*

When a contact is compressed, the deflection of the surfaces depends upon the stress field within the material, which is dependent upon the applied load and the original geometry of the mating components. Here, deflection refers to the displacement of the surface of the analysis subject due to the compression caused by an applied load, P.

The change in time for flight through the analysis subject is given by:

$$\Delta t = \frac{2d_P}{c_P} - \frac{2d_0}{c_0} \qquad [3]$$

Where $d_0$ is the thickness of the subject element in the unstressed state and co is its speed of sound as illustrated in Figure 5. The subscript $P$ refers to the analysis subject in the stressed state (i.e. under load, $P$). Combining this with the expression for the acoustoelastic effect (equation [2]), and noting that $\Delta c = c_0 - c_P$, gives the deflection, $\delta_z$:

$$\delta_z = \frac{-\Delta t c_0 d_0}{A \Delta t c_0 + 2 d_0 (A-1)} \qquad [4]$$

Since the deflection is inherently dependent on the applied load, its measurement allows the applied load to be deduced, using elastic theory, finite element methods, numerical methods, and/or empirical load/deflection relations. Some of these methods, such as elastic theory and finite element methods, may involve an integration or summation of d$\delta_z$/dz over the ultrasound path.

For the example case of a cylindrical steel roller bearing, a semi empirical equation can be re-arranged to obtain the contact load ($P$, N), given the roller length (l, mm) (Palmgren, A (1959), Ball and Roller Bearing Engineering, SKF Industries Inc).

$$P = \left( \frac{\delta_z l^{0.8}}{3.84 \times 10^{-5}} \right)^{\frac{1}{0.9}} \qquad [5]$$

This enables the measured time-of-flight to be directly related to the load that is being applied to the bearing, enabling the use of the time-of-flight measurement system as a load monitoring system. For other component geometries there are other mathematical solutions that relate the load to the contact deformation (see for example Johnson, K.L., (1985), Contact Mechanics, Cambridge University Press). In some embodiments, a finite element solution may be used, particularly where the geometry is complex or where plastic or non-linear deformations are involved. In some embodiments a relationship between deflection and load may be calculated or otherwise determined and stored, in a lookup table, for example, prior to receiving the ultrasound data. This may reduce a computational load, reduce calculation time and/or allow the use of less expensive processing equipment in the analysis device.

In the above description it was assumed that the measured ToF is for propagation of ultrasound through the analysis subject. However, a similar derivation applies when the ToF is measured for ultrasound propagating in a component in contact with the analysis subject, for example where the ultrasound propagates in a rolling element race and the analysis subject is the rolling element. In this case the deflection is derived using parameters for the element for which ToF is measured, and the contact load is calculated using the derived deflection and the material parameters for the analysis subject.

*Phase Change of Ultrasound*

For the case of a free surface reflection (i.e. reflection from a surface that is not in contact with another element), the boundary (surface) will not influence the phase of the reflected wave, meaning that a simple technique such as zero-crossing analysis can be used to obtain the change in time-of-flight. An example of such a case would be the measurement of the tension in a threaded fastener by considering its change in length under load. Figure 6 illustrates a simple zero-crossing approach to determine the time shift between a reference signal 610 and a measured signal 620. The time

difference, $\Delta t$, between a zero 615 of the reference signal 610 and a corresponding zero 625 of the measured signal 620 represents the change in time-of-flight of the ultrasound due to a change in the length of the element, without a change in the contact condition at the measured surface.

However, for the case of a reflection from a contact, the phase of the reflected wave will change at the interface. The magnitude of the phase change (and indeed the amplitude) depends on the condition of the contact. The phase change varies from 0° for a free surface to 90° for a perfectly bonded interface. These contact conditions cannot be known a *priori*, as for loaded tribological components there may be different lubrication regimes dependent upon the applied loads, and/or different amounts of solid asperity contact. Figure 7 shows an Argand diagram for the ideal reflected wave phase variation with different contact conditions in which the mating conditions are of the same material (e.g. a steel-steel contact). Using a technique such as zero-crossing measurement in such a case would result in an inaccurate measurement of time-of-flight, since the phase shift would affect the timing of the zero-crossing points of the measured wave, as well as the change in time-of-flight due to the changing stress in the component. A technique is therefore required to eliminate the effect of the phase shift.

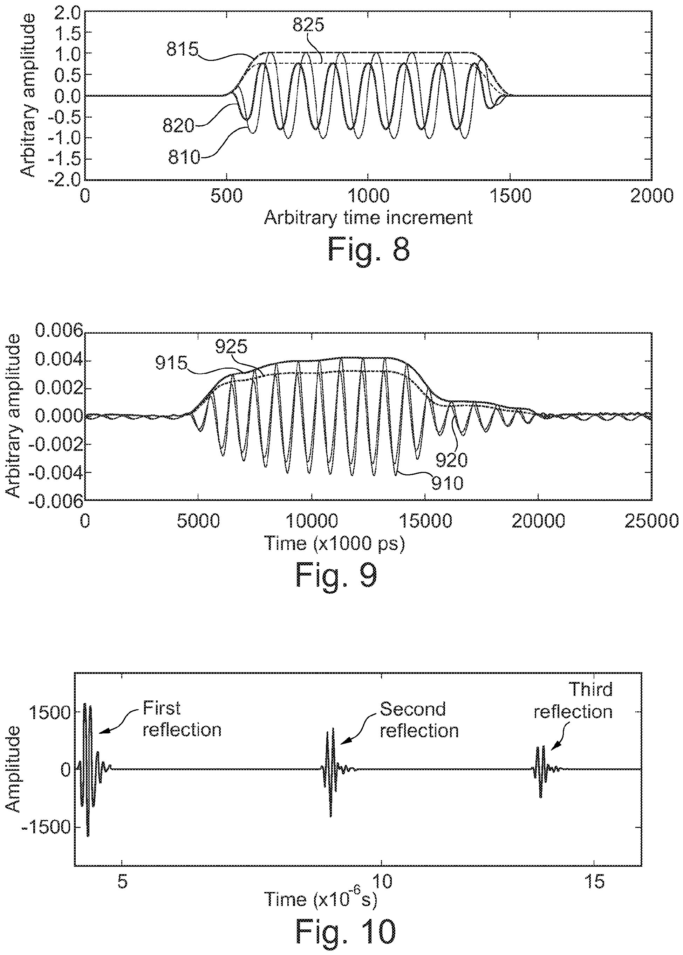

Despite the change in the phase shift at the contact surface, the envelope of ultrasonic energy is not altered by the contact dependent phase shift. Figure 8 shows two simulated signals, the reference signal 810 (e.g. corresponding to reflection from an unloaded interface), and the signal 820 (e.g. corresponding to reflection from a loaded interface). The phase shift is clear: line 820 shifts to the left relative to the reference line 810.

Removal of the contact dependent phase shift may be achieved by basing the time-of-flight determination on the envelope of the reference and measured pulses.

According to some embodiments, a Fast Hilbert transform (FHT) is applied to the reference wave signal (e.g. corresponding to an unloaded component) and a reflected (measured) ultrasound wave signal. The signal measured by the ultrasonic transducer is the 'real' component of the ultrasonic wave. The ultrasonic wave however, has an additional 'imaginary' component which can be obtained by applying the FHT. The result of this process is to obtain the time dependent complex vector of the ultrasonic wave. By calculating the time dependent magnitude of this complex waveform vector, the envelope of the wave, which can be considered analogous to a time based energy profile of the reflected wave, may be obtained. Figure 8 shows the envelope 815 of the reference signal 810 and the envelope 825 of the measured signal 820 corresponding to a loaded contact surface. It can be seen that the extent of the two envelopes (815 and 825) are independent of the phase of the reflected signal, though the amplitude will vary depending on the proportion of ultrasonic energy which has been transmitted through the contact into the mating component.

The Hilbert transform is a mathematically robust way to obtain the envelope of the wave. However, other filtering methods, such as rolling circle filtering, for example, could be used in a similar manner.

By cross correlating the envelope of the reference signal with that of the measured signal, the time shift of the 'energy packet' of the wave may be calculated. This time shift corresponds to the change in time-of-flight as a result of geometric deflection and acoustoelastic effects alone. This means that the phase-shift effect on the reflected signal due to the contact condition has been removed. Figure 9 shows a pair of experimentally measured signals from a contact, first unloaded to obtain a reference signal 910 (solid line) and then loaded to obtain a measured (loaded) signal 920 (dashed line). In this example, the loaded signal was measured with a load of 27 kN applied to the contact surface. The envelope 915 (solid line) of the reference (unloaded) signal 910 and the envelope 925 (dashed line) of the measured (loaded) signal 920 can be time-shifted to coincide, as shown in Figure 9. The time shift that produces the coincidence between the envelopes 915, 925 is then equal to the change in the time-of-flight, $\Delta t$ of the ultrasonic pulse between loaded and unloaded states which may then be used in equation [4].

*Signal Processing*

According to some embodiments, waveforms are extracted in the time domain. Figure 10 shows an example of a measurement of a bearing raceway using a contact transducer. Several reflections from the contact interface between the inner raceway and the rolling element are sensed by the transducer and shown as multiple peaks in Figure 10. Waveforms, such as that shown in Figure 10, may be generated continuously as the components move in and out of contact. The signals measured at unloaded and loaded times are recorded and passed through the FHT. The results of the FHT for the loaded and unloaded times are cross-correlated, and the change in time interval between second and third reflections may be used to measure the change in the time-of-flight caused by the combination of the deflection of the analysis subject and the acoustoelastic effect. This time-of-flight is used to determine the deflection using equation [4] above. The deflection may then be used in equation [5] above, or an equivalent equation for the specific contact geometry, or a finite element method, or an empirically derived relationship, to determine the load that is being applied to the bearing.

**Experimental Demonstration**

Testing has shown that the load applied to a rolling bearing under typical operating conditions is sufficient to deflect the raceway to such an extent that the change in time-of-flight is measureable using conventional ultrasonic generation, digitizing, and receiving equipment.

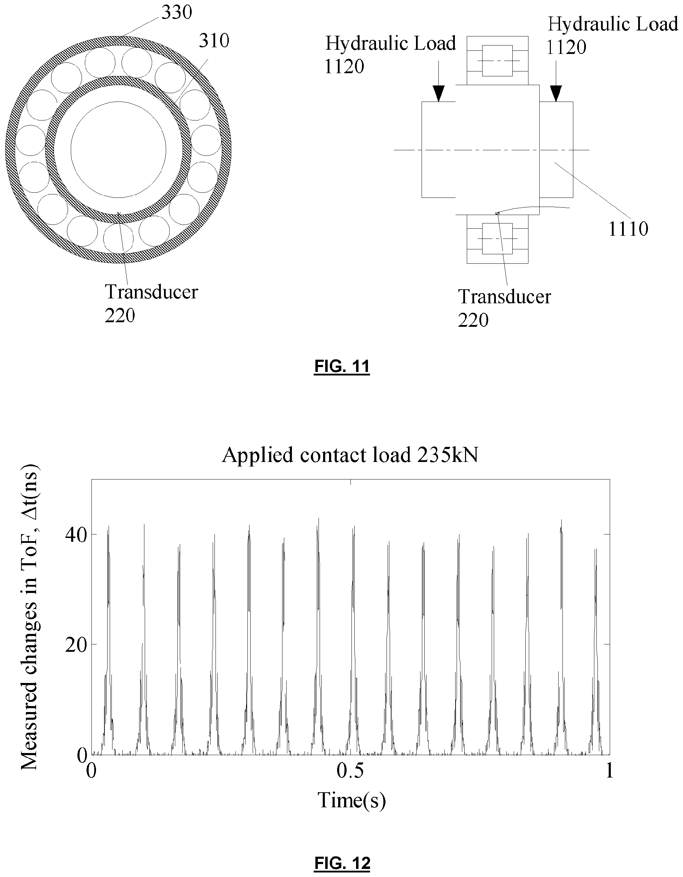

The testing was conducted using an arrangement as shown in Figure 11. An ultrasonic sensor 220 was coupled to a NU2244EEKM rolling element bearing and a broad band ultrasonic pulse (centre frequency 10 MHz) was propagated through the bearing inner raceway and recorded back at the transducer. The sensor was located at the most loaded position on the bore of the inner raceway so that the sensor measured the maximum contact load. More generally, any position of interest can be chosen as the sensor position or multiple sensors may be used at the same time to measure load distribution around a raceway circumference.

The rolling bearing was set in motion and continuous pulsing was initiated. When the rollers were remote from the sensor location, the pulse was travelling through largely undeformed material. As each rolling element approached and passed over the sensor location, the deflection rose to a maximum and fell back to zero.. The radial load was applied on the stationary shaft 1110 via a hydraulic cylinder 1120. The load was then transmitted from the stationary inner raceway 310 to rolling elements 125 and the rotational outer raceway 330. As illustrated in Figure 11, the load in contact measured here is the maximum load transmitted from the inner raceway to the rolling element.

Figure 12 shows the measured change in the time-of-flight as the rolling element moves over the sensor location for one revolution when the bearing was operated at 100 RPM with the maximum contact load of 235 kN. The vertical axis shows the measured change in time-of-flight, and the horizontal axis shows the time of bearing operation. Each passage of the roller was clearly observed as a change in time of flight (i.e. there are 15 roller passes during the one second of bearing operation).

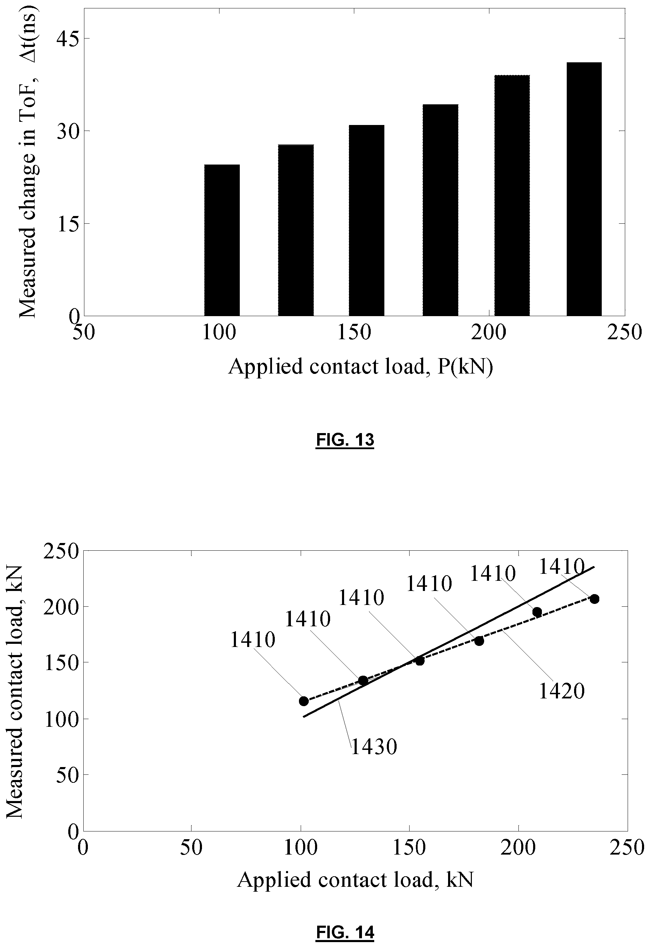

Six different bearing contact loads were tested. The maximum measured time-of-flight change for each load is shown in Figure 13. The contact load can be derived from the measured time-of flight change by using equations [4] and [5]. Then the contact load from the ultrasonic method can be compared with the contact load applied.

Figure 14 shows a comparison between the load determined experimentally 1410 using the measured time-of-flight and the applied contact load. Line 1420 is the linear fit for the load experimentally determined from the measured change in time-of-flight. Line 1430 corresponds to exact agreement between measured and applied load. Figure 14 shows that good agreement is achieved and the load can be accurately determined using time-of-flight data and the described signal processing approach.

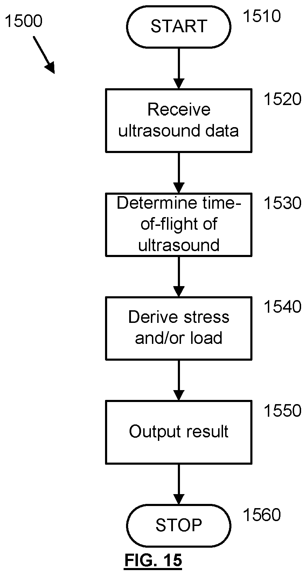

Figure 15 shows a method 1500 according to some embodiments of the invention. The method begins at 1510. Ultrasound data is received at 1520. The ultrasound data describes a measured ultrasound signal having a propagation direction with a greatest component perpendicular to a face of an analysis subject to which a principal component of the stress is applied. In some examples the propagation direction of the ultrasound may be perpendicular, or substantially perpendicular, to the contact surface.

The ultrasound data is used, at 1530, to determine time-of-flight information (time-of-flight data) for the ultrasound. The time-of-flight information may reflect a measured time-of-flight of an ultrasound pulse between an ultrasound generator and an ultrasound sensor. In some embodiments, the time-of-flight information may reflect a change in the time-of-flight between two contact conditions at the contact surface.

The stress and/or load in the analysis subject is determined at 1540, based on the time-of-flight information.

The result is outputted at 1550. The output may include one or more of storing, displaying, printing or performing further calculations using the stress and/or load determined at 1540. The method ends at 1560. In some embodiments the method may be repeated.

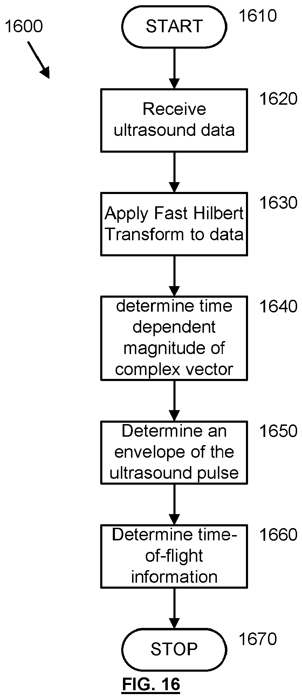

Figure 16 shows an embodiment of a method 1600 for determining a time-of-flight of ultrasound (e.g. according to 1530 of Figure 15). The method starts at 1610, and ultrasound data is received at 1620, as described in relation to 1520 of Figure 15.

At 1630 a Fast Hilbert Transform is applied to the data to determine a time dependent magnitude of a complex vector of the ultrasound.

At 1650 an envelope of the ultrasound is determined based on the complex vector determined at 1630. The time-of-flight information is determined at 1660 based on the envelope determined at 1650. In some examples the time-of-flight information is determined by cross-correlating the envelope with an envelope of a reference signal to determine a time difference between the reference signal and the signal under consideration. The method stops at 1670.

As shown in Figure 12, it is possible to detect each rolling element of a bearing as it passes above the sensor. This allows a signal to be attributed to a particular rolling element. Thus, the load over time on each rolling element may be monitored individually.

Embodiments of the invention allow a load on a machine element to be monitored. In some embodiments, the measured load may be stored to produce a history of loading of the component.

Embodiments of the invention may be used to assist in predicting failure of contact machine elements. This can allow planned replacement of a failing component before the component fails, and also avoid unnecessary precautionary replacement of a component. This may be particularly important where maintenance is difficult, for example in off-shore installations, where access to the installation may be costly.

Embodiments of the invention may be applied in quality control and checking. For example, some components (e.g. bearings) may be guaranteed to perform up to a particular load. Embodiments of the invention may be used to monitor the load on the components and determine if a failure is due to excessive loads being applied, or due to under-performance of the component.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith.

## Claims

1.  An apparatus comprising:

    a rolling bearing including a first element (123) and a second element (125), the first and second elements in tribological contact;
    ultrasound equipment (120) to generate and detect ultrasound pulses;
    an analysis device (110) comprising:

    an input, arranged to receive ultrasound data (135) from the ultrasound equipment (120), the ultrasound data (135) relating to a contact surface (127) between the first (123) and second elements (125) in tribological contact, wherein the ultrasound equipment is arranged such that a propagation direction of the ultrasound has a greatest component perpendicular to the contact surface (127);
    an output, arranged to output data (115) relating to at least one of a contact stress in the first element (123) or a contact load applied to the first element (123); and
    a processing section (102, 105), wherein the processing section (102, 105) is arranged to:
    process the ultrasound data (135) to determine ultrasound time-of-flight data (103), and derive the output data (115), wherein the ultrasound data (135) relates to at least one ultrasound pulse, and the time-of-flight of the ultrasound is determined based on an envelope (825; 925) of the ultrasound pulse, wherein the processing to determine ultrasound time-of-flight data (103) includes cross-correlating the determined envelope (825;925) with an envelope (815; 915) of a reference signal such that the determined time-of-flight of the ultrasound is independent of a phase shift dependent on a contact condition at the contact surface, and wherein the contact condition is changeable between a non-contact state and a contact state, load being applied to the first element (123) via the contact surface (127) in the contact state.

2.  The apparatus of claim 1, wherein
    determining an envelope (825; 925) of the ultrasound pulse comprises applying a Fast Hilbert Transform to the ultrasound data (135).

3.  The apparatus of any preceding claim, wherein the first element (123) is a ball-race, rolling element race, or rolling element.

4.  The apparatus of any preceding claim, further comprising:

    a turbine including the rolling bearing,
    a wind turbine including the rolling bearing,
    a vehicle track including the rolling bearing,
    a railed vehicle including the rolling bearing,
    a paper mill including the rolling bearing,
    a metal rolling mill including the rolling bearing, or
    a hydro-power generator including the rolling bearing.

**5.** The apparatus of claim 1, wherein the first element (123) and the second element (125) are to have interposed between them any of:

    a fluid layer,
    a lubricant layer,
    an oil film,

**6.** A method comprising:

    receiving ultrasound data (135) relating to ultrasound received from a contact surface (127) between first (123) and second (125) elements in tribological contact, the first and second elements being included in a rolling bearing;
    determining ultrasound time-of-flight data (103) based on the received ultrasound data (135),
    deriving at least one of contact stress in the first element (123) or contact load applied to the first element (123) based on the ultrasound time-of-flight data (103); and
    outputting the result of the deriving, wherein

        a propagation direction of the ultrasound has a greatest component perpendicular to the contact surface (127), and
        the time-of-flight data (103) relates to at least one ultrasound pulse, and the time-of-flight of the ultrasound is determined based on an envelope (825; 925) of the ultrasound pulse, wherein determining ultrasound time-of-flight data (103) includes cross correlating the determined envelope (825; 925) with an envelope (815; 915) of a reference signal such that the determined time-of-flight of the ultrasound is independent of a phase shift dependent on a contact condition at the contact surface, and wherein the contact condition is changeable between a non-contact state and a contact state, load being applied to the first element (123) via the contact surface (127) in the contact state.

**7.** The method of claim 6, wherein the first element (123) and the second element (125) are to have interposed between them any of:

    a fluid layer,
    a lubricant layer,
    an oil film,

**8.** A computer program that, when executed, causes the device of any one of claims 1 to 4 to perform the method of claim 6.

**9.** A computer readable storage medium, storing the computer program of claim 8.

**Patentansprüche**

**1.** Vorrichtung, umfassend:

    ein Wälzlager, das ein erstes Element (123) und ein zweites Element (125) beinhaltet, wobei das erste und das zweite Element in tribologischem Kontakt sind;
    Ultraschallgerät (120) zum Erzeugen und Erfassen von Ultraschallimpulsen;
    eine Analysevorrichtung (110), umfassend:

        einen Eingang, der angeordnet ist, um Ultraschalldaten (135) von dem Ultraschallgerät (120) zu empfangen, wobei sich die Ultraschalldaten (135) auf eine Kontaktfläche (127) zwischen dem ersten (123) und dem zweiten Element (125) in tribologischem Kontakt beziehen, wobei das Ultraschallgerät angeordnet ist, sodass eine Ausbreitungsrichtung des Ultraschalls eine größte Komponente senkrecht zu der Kontaktfläche (127) aufweist;
        einen Ausgang, der angeordnet ist, um Daten (115) auszugeben, die sich auf mindestens eines von einer Kontaktspannung in dem ersten Element (123) oder einer auf das erste Element (123) ausgeübten Kontaktlast beziehen; und
        einen Verarbeitungsabschnitt (102, 105), wobei der Verarbeitungsabschnitt (102, 105) zu Folgendem angeordnet ist:
Verarbeiten der Ultraschalldaten (135), um Ultraschall-Laufzeitdaten (103) zu bestimmen, und Ableiten der Ausgangsdaten (115), wobei sich die Ultraschalldaten (135) auf mindestens einen Ultraschallimpuls beziehen und die Laufzeit des Ultraschalls basierend auf einer Einhüllenden (825; 925) des Ultraschallimpulses bestimmt wird, wobei die Verarbeitung zum Bestimmen der Ultraschall-Laufzeitdaten (103) ein Kreuzkorrelieren der bestimmten Einhüllenden (825; 925) mit einer Einhüllenden (815; 915) eines Referenzsignals beinhaltet, sodass die bestimmte Laufzeit des Ultraschalls unabhängig von einer Phasenverschiebung ist, die von einer Kontaktbedingung an der Kontaktfläche abhängt, und wobei der Kontaktzustand zwischen einem Nicht-Kontaktzustand und einem Kontaktzustand veränderbar ist, wobei in dem Kontaktzustand über die Kontaktfläche (127) eine Last auf das erste Element (123) angewendet wird.

2. Vorrichtung nach Anspruch 1, wobei:
ein Bestimmen einer Einhüllenden (825; 925) des Ultraschallimpulses ein Anwenden einer schnellen Hilbert-Transformation auf die Ultraschalldaten (135) umfasst.

3. Vorrichtung nach einem der vorherigen Ansprüche, wobei das erste Element (123) ein Kugellaufring, ein Wälzkörperlaufring oder ein Wälzkörper ist.

4. Vorrichtung nach einem vorherigen Anspruch, ferner umfassend:

eine Turbine, die das Wälzlager beinhaltet,
eine Windkraftanlage, die das Wälzlager beinhaltet,
eine Fahrzeugkette, die das Wälzlager beinhaltet,
ein Schienenfahrzeug, das das Wälzlager beinhaltet,
eine Papierfabrik, die das Wälzlager beinhaltet,
ein Metallwalzwerk, das das Wälzlager beinhaltet, oder
einen Wasserkraftgenerator, der das Wälzlager beinhaltet.

5. Vorrichtung nach Anspruch 1, wobei zwischen dem ersten Element (123) und dem zweiten Element (125) eines von Folgenden eingefügt ist:

eine Fluidschicht,
eine Schmierstoffschicht,
ein Ölfilm.

6. Verfahren, umfassend:

Empfangen von Ultraschalldaten (135), die sich auf Ultraschall beziehen, der von einer Kontaktfläche (127) zwischen einem ersten (123) und einem zweiten (125) Element in tribologischem Kontakt empfangen wird, wobei das erste und das zweite Element in einem Wälzlager beinhaltet sind;
Bestimmen von Ultraschall-Laufzeitdaten (103) basierend auf den empfangenen Ultraschalldaten (135),
Ableiten von mindestens einer Kontaktspannung in dem ersten Element (123) oder einer auf das erste Element (123) ausgeübten Kontaktlast basierend auf den Ultraschall-Laufzeitdaten (103); und
Ausgeben des Resultats der Ableitung, wobei
eine Ausbreitungsrichtung des Ultraschalls eine größte Komponente senkrecht zu der Kontaktfläche (127) aufweist, und
die Laufzeitdaten (103) sich auf mindestens einen Ultraschallimpuls beziehen, und die Laufzeit des Ultraschalls basierend auf einer Einhüllenden (825; 925) des Ultraschallimpulses bestimmt wird, wobei ein Bestimmen der Ultraschall-Laufzeitdaten (103) ein Kreuzkorrelieren der bestimmten Einhüllenden (825; 925) mit einer Einhüllenden (815; 915) eines Referenzsignals beinhaltet, sodass die bestimmte Laufzeit des Ultraschalls unabhängig von einer Phasenverschiebung ist, die von einem Kontaktzustand an der Kontaktoberfläche abhängt, und wobei der Kontaktzustand zwischen einem Nicht-Kontaktzustand und einem Kontaktzustand veränderbar ist, wobei in dem Kontaktzustand über die Kontaktoberfläche (127) eine Last auf das erste Element (123) angewendet wird.

7. Verfahren nach Anspruch 6, wobei zwischen dem ersten Element (123) und dem zweiten Element (125) eines von Folgenden eingefügt ist:

eine Fluidschicht,

eine Schmierstoffschicht,
ein Ölfilm.

8. Computerprogramm, das, wenn es ausgeführt wird, die Vorrichtung nach einem der Ansprüche 1 bis 4 veranlasst, das Verfahren nach Anspruch 6 auszuführen.

9. Computerlesbares Speichermedium, das das Computerprogramm nach Anspruch 8 speichert.

**Revendications**

1. Appareil comprenant :

   un palier à roulement comprenant un premier élément (123) et un second élément (125), les premier et second éléments étant en contact tribologique ;
   un équipement à ultrasons (120) pour générer et détecter des impulsions ultrasonores ;
   un dispositif d'analyse (110) comprenant :

   une entrée, agencée pour recevoir des données ultrasonores (135) en provenance de l'équipement à ultrasons (120), les données ultrasonores (135) se rapportant à une surface de contact (127) entre les premier (123) et second éléments (125) en contact tribologique, ledit équipement à ultrasons étant agencé de sorte qu'une direction de propagation des ultrasons possède la plus grande composante perpendiculaire à la surface de contact (127) ;
   une sortie, agencée pour délivrer en sortie des données (115) se rapportant à au moins l'une d'une contrainte de contact dans le premier élément (123) ou d'une charge de contact appliquée au premier élément (123) ; et
   une section de traitement (102, 105), ladite section de traitement (102, 105) étant agencée pour :
   traiter les données ultrasonores (135) pour déterminer les données de temps de vol d'ultrasons (103), et dériver les données de sortie (115), lesdites données ultrasonores (135) se rapportant à au moins une impulsion ultrasonore, et ledit temps-de-vol d'ultrasons étant déterminé sur la base d'une enveloppe (825 ; 925) de l'impulsion ultrasonore, ledit traitement pour déterminer les données de temps de vol d'ultrasons (103) comprenant la corrélation croisée de l'enveloppe déterminée (825 ; 925) avec une enveloppe (815 ; 915) d'un signal de référence de sorte que le temps de vol déterminé des ultrasons soit indépendant d'un déphasage dépendant d'une condition de contact au niveau de la surface de contact, et ladite condition de contact pouvant être modifiée entre un état sans contact et un état de contact, la charge étant appliquée au premier élément (123) par l'intermédiaire de la surface de contact (127) dans l'état de contact.

2. Appareil selon la revendication 1,
   ladite détermination d'une enveloppe (825 ; 925) de l'impulsion ultrasonore comprenant l'application d'une transformation de Hilbert rapide aux données ultrasonores (135).

3. Appareil selon une quelconque revendication précédente, ledit premier élément (123) étant une bague de roulement à billes, une bague d'élément de roulement ou un élément de roulement.

4. Appareil selon une quelconque revendication précédente, comprenant en outre :

   une turbine comprenant le palier à roulement,
   une éolienne comprenant le palier à roulement,
   une voie de véhicule comprenant le palier à roulement,
   un véhicule sur rails comprenant le palier à roulement,
   une papeterie comprenant le palier à roulement,
   un laminoir métallique comprenant le palier à roulement, ou
   un générateur hydroélectrique comprenant le palier à roulement.

5. Appareil selon la revendication 1, ledit premier élément (123) et ledit second élément (125) devant comporter, interposé entre eux, l'un quelconque parmi :

   une couche fluide,
   une couche de lubrifiant,

un film d'huile.

6. Procédé comprenant :

la réception des données ultrasonores (135) se rapportant aux ultrasons reçus en provenance d'une surface de contact (127) entre des premier (123) et second (125) éléments en contact tribologique, les premier et second éléments étant compris dans un palier à roulement ;
la détermination des données de temps de vol d'ultrasons (103) sur la base des données ultrasonores reçues (135),
la dérivation d'au moins l'une de la contrainte de contact dans le premier élément (123) ou de la charge de contact appliquée au premier élément (123) sur la base des données de temps de vol d'ultrasons (103) ; et l'émission en sortie du résultat de la dérivation,

une direction de propagation des ultrasons possédant la plus grande composante perpendiculaire à la surface de contact (127), et
lesdits données de temps de vol (103) se rapportant à au moins une impulsion ultrasonore, et ledit temps de vol des ultrasons étant déterminé sur la base d'une enveloppe (825 ; 925) de l'impulsion ultrasonore, ladite détermination des données de temps de vol d'ultrasons (103) comprenant la corrélation croisée de l'enveloppe déterminée (825 ; 925) avec une enveloppe (815 ; 915) d'un signal de référence de sorte que le temps de vol déterminé des ultrasons soit indépendant d'un déphasage dépendant d'un condition de contact au niveau de la surface de contact, et ladite condition de contact pouvant être modifiée entre un état sans contact et un état de contact, la charge étant appliquée au premier élément (123) par l'intermédiaire de la surface de contact (127) dans l'état de contact.

7. Procédé selon la revendication 6, ledit premier élément (123) et ledit second élément (125) devant comporter, interposé entre eux, l'un quelconque de :

une couche fluide,
une couche de lubrifiant,
un film d'huile.

8. Programme informatique qui, lorsqu'il est exécuté, amène le dispositif selon l'une quelconque des revendications 1 à 4 à effectuer le procédé selon la revendication 6.

9. Support de stockage lisible par ordinateur stockant le programme informatique selon la revendication 8.

FIG. 1

FIG. 2

**FIG. 3a**

**FIG. 3b**

**FIG. 4**

Fig. 5a

Fig. 5b

Fig. 5c

Fig. 6

Fig. 7

Fig. 8

Fig. 9

Fig. 10

**FIG. 11**

Applied contact load 235kN

**FIG. 12**

**FIG. 13**

**FIG. 14**

1500

START 1510

↓

Receive ultrasound data 1520

↓

Determine time-of-flight of ultrasound 1530

↓

Derive stress and/or load 1540

↓

Output result 1550

↓

STOP 1560

**FIG. 15**

1600

START  1610

↓

Receive
ultrasound data  1620

↓

Apply Fast Hilbert
Transform to data  1630

↓

determine time
dependent
magnitude of
complex vector  1640

↓

Determine an
envelope of the
ultrasound pulse  1650

↓

Determine time-
of-flight
information  1660

↓

STOP  1670

**FIG. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 1763908
- DE 102008034484
- US 2014135655 A
- JP 2011038835 B
- US 4821574 A

**Non-patent literature cited in the description**

- **EGLE, D.M. ; BRAY, D.E.** Measurement of acoustoelastic and third-order elastic constants for rail steel. *J. Acoust. Soc. Am.,* 1976, vol. 60 (3), 741-744
- **JOHNSON, K.L.** Contact Mechanics. Cambridge University Press, 1985